(19) Europäisches Patentamt / European Patent Office / Office européen des brevets

(11) **EP 1 960 699 B1**

(12) **EUROPÄISCHE PATENTSCHRIFT**

(45) Veröffentlichungstag und Bekanntmachung des Hinweises auf die Patenterteilung:
**25.05.2011 Patentblatt 2011/21**

(21) Anmeldenummer: **06840997.8**

(22) Anmeldetag: **15.12.2006**

(51) Int Cl.:
*F16H 61/42* (2010.01)    *B60W 30/18* (2006.01)
*F16H 59/54* (2006.01)    *B60W 10/18* (2006.01)
*B60W 10/10* (2006.01)

(86) Internationale Anmeldenummer:
**PCT/EP2006/012126**

(87) Internationale Veröffentlichungsnummer:
**WO 2007/073892 (05.07.2007 Gazette 2007/27)**

(54) **HYDROSTATISCHER ANTRIEB UND VERFAHREN ZUM ABBREMSEN EINES HYDROSTATISCHEN ANTRIEBS**

HYDROSTATIC DRIVE AND METHOD FOR BRAKING A HYDROSTATIC DRIVE

ENTRAINEMENT HYDROSTATIQUE ET PROCEDE POUR FREINER UN ENTRAINEMENT HYDROSTATIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.12.2005 DE 102005060341**
**11.10.2006 DE 102006048198**

(43) Veröffentlichungstag der Anmeldung:
**27.08.2008 Patentblatt 2008/35**

(73) Patentinhaber: **Bosch Rexroth AG**
**70184 Stuttgart (DE)**

(72) Erfinder: **BEHM, Martin**
**89073 Ulm (DE)**

(74) Vertreter: **Körfer, Thomas**
**Mitscherlich & Partner**
**Patent- und Rechtsanwälte**
**Sonnenstrasse 33**
**80331 München (DE)**

(56) Entgegenhaltungen:
**WO-A-97/33782       WO-A-2006/066759**
**DE-A1- 3 149 473     DE-C1- 4 234 826**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Abbremsen eines hydrostatischen Antriebs und einen solchen hydrostatischen Antrieb. _

Hydrostatische Antriebe werden häufig zum Antreiben von Arbeitshydraulik oder Fahrantrieben in Baustellenfahrzeugen verwendet. Dabei wird eine primäre Antriebsquelle, beispielsweise eine Brennkraftmaschine, mit mindestens einer Hydropumpe verbunden. Zum Antrieb des Fahrzeugs mit dieser Hydropumpe ist meist im geschlossenen Kreislauf ein Hydromotor verbunden. Aufgrund der Massenträgheit des Fahrzeugs wirkt beim Bremsen des Fahrzeugs der Hydromotor, welcher dann durch die Fahrzeugräder angetrieben wird, als pumpe und fördert ohne Umkehr der Strömungsrichtung Druckmittel in dem geschlossenen hydraulischen Kreislauf. Die so auf ihrer Saugseite mit dem Druckmittel beaufschlagte Hydropumpe wirkt dementsprechend als Hydromotor und erzeugt ein Abtriebsdrehmoment, welches sich an der Brennkraftmaschine abstützt.

Bei langsam fahrenden Fahrzeugen, wie beispielsweise Gabelstaplern, wird häufig das hydrostatische Getriebe des Fahrantriebs dazu verwendet, das Fahrzeug auch abzubremsen. Es ist hierzu bekannt, die Hydropumpe an der Brennkraftmaschine abzustützen. Die so erzielbare Bremsleistung ist durch die verfügbare Bremsleistung der Brennkraftmaschine begrenzt. Aus der DE 198 52 039 A1 ist es weiterhin bekannt, mit der Pumpenwelle eine zweite, verstellbare Hydropumpe zu verbinden. Diese zweite, verstellbare Hydropumpe ist in einem offenen Kreislauf angeordnet und zur Förderung in lediglich eine Richtung ausgelegt. Das von der zweiten, verstellbaren Hydropumpe geförderte Druckmittel kann im Falle eines Bremsvorgangs über ein Druckbegrenzungsventil zurück in das Tankvolumen entspannt werden. Der Volumenstrom auf das Druckbegrenzungsventil hin wird dabei durch ein Ventil begrenzt, welches mit zunehmender Betätigung eines Bremspedals einen größer werdenden Volumenstrom dem Druckbegrenzungsventil zuführt.

An dem beschriebenen Antriebssystem ist es nachteilig, dass zum Erzeugen einer Bremswirkung zusätzlich zu der Hydropumpe und dem Hydromotor sowie deren jeweiliger Ansteuerung eine weitere Hydropumpe erforderlich ist. Neben der Verstellung der Hydropumpe sowie des Hydromotors des hydrostatischen Getriebes ist es daher zusätzlich erforderlich, die weitere Hydropumpe in ihrem Fördervolumen einzustellen. Zusätzlich muss über ein verstellbares Ventil der über das Druckbegrenzungsventil entspannte Förderstrom der zusätzlichen Hydropumpe geregelt werden. Der Bremsvorgang involviert damit nicht nur den Fahrantrieb, sondern darüber hinaus auch den zur Betätigung von Arbeitshydrauliken benötigten offenen Kreislauf.

Aus der WO 97/33782 sind die Merkmale des Oberbegriffes des Anspruches 1 oder 7 bekannt.

Der Erfindung liegt die Aufgabe zugrunde, einen hydrostatischen Antrieb sowie ein Verfahren zum Abbremsen eines hydrostatischen Antriebs zu schaffen, bei dem allein durch die in einem geschlossenen hydraulischen Kreislauf angeordneten Elemente ein Bremsvorgang durchführbar ist.

Die Aufgabe wird durch den erfindungsgemäßen hydrostatischen Antrieb mit den Merkmalen nach Anspruch, oder nach Verfahrensanspruch 7 gelöst.

Der erfindungsgemäße hydrostatische Antrieb umfasst eine Hydropumpe in einem geschlossenen Kreislauf. In dem geschlossenen Kreislauf ist mit der Hydropumpe ein Hydromotor über eine erste und eine zweite Arbeitsleitung des geschlossenen Kreislaufs verbunden. Ferner umfasst der hydrostatische Antrieb eine Bremsbetätigungseinrichtung und zumindest ein stromabwärts des Hydromotors mit der Arbeitsleitung verbundenes Druckbegrenzungsventil. Bei Betätigung der Bremsbetätigungseinrichtung ist die Hydropumpe auf ein Bremsfördervolumen einstellbar. Der Hydromotor ist abhängig von einer Betätigungsstärke der Bremsbetätigungseinrichtung mit zunehmender Betätigungsstärke in Richtung größeren Schluckvolumens verstellbar. Das Bremsfördervolumen wird dabei so gewählt, dass zumindest ein Teil des durch den als Pumpe wirkenden Hydromotor im Schiebebetrieb geförderten Druckmittels durch das Druckbegrenzungsventil entspannt wird. Dabei wird kinetische Energie, die es abzubauen gilt, in Wärme umgewandelt. Eine einfache Lösung ergibt sich, wenn das Bremsfördervolumen einem Nullhub der Hydropumpe entspricht. Eine zusätzlich vorhandene Hydropumpe ist zu einem solchen Bremsvorgang nicht erforderlich. Weiterhin können Druckbegrenzungsventile, die zum Absichern der Arbeitsleitung des geschlossenen Kreislaufs des hydrostatischen Antriebs verwendet werden, während des Bremsbetriebs vorteilhaft genutzt werden.

Gemäß dem vorteilhaften erfindungsgemäßen Verfahren wird in einem solchen Antrieb zunächst eine Betätigung einer Bremsbetätigungseinrichtung erkannt. Aufgrund der erkannten Betätigung der Bremsbetätigungseinrichtung wird die Hydropumpe auf ein Bremsfördervolumen eingestellt. Das Schluckvolumen des Hydromotors wird dann in Abhängigkeit von einer Betätigungsstärke der Bremsbetätigungseinrichtung auf ein entsprechendes Schluckvolumen gestellt, wobei der Hydromotor mit zunehmender Betätigungsstärke in Richtung eines größeren Schluckvolumens verstellt wird. Das durch den Hydromotor in die stromabwärts mit ihm verbundene Arbeitsleitung geförderte Druckmittel wird über das Druckbegrenzungsventil entspannt.

In den Unteransprüchen sind vorteilhafte Ausführungen des hydrostatischen Antriebs sowie des erfindungsgemäßen Verfahrens dargestellt.

Insbesondere ist es vorteilhaft, den Hydromotor zunächst bei Betätigung der Bremsbetätigungseinrichtung auf ein reduziertes oder verschwindendes Fördervolumen einzustellen und ausgehend von dieser Position in Richtung eines größeren Schluckvolumens wieder auszuschwenken. Das Verstellen des Hydromotors auf ein zunächst reduziertes oder verschwindendes Schluckvolumen hat den Vorteil, dass Druckspitzen in dem hydrostatischen geschlossenen Kreislauf vermieden werden.

Um zusätzlich die Bremswirkung eines mit der Hydropumpe verbundenen Antriebsmotors auszunutzen, ist es vorteilhaft, das Bremsfördervolumen so zu wählen, dass sich die Hydropumpe mit einem von Null verschiedenen Hubvolumen an dem Antriebsmotor abstützt. Somit wird ein Teil der abzubauenden kinetischen Energie durch Abstützen an dem Antriebsmotor und der restliche Energieanteil durch Umwandeln in Wärme an dem Druckbegrenzungsventil abgebaut. Bei diesem von Null verschiedenen Fördervolumen ist vorzugsweise die von der Hydropumpe aufgenommene Leistung bei Öffnungsdruck des Druckbegrenzungsventils identisch mit der Bremsleitung des mit dem Hydromotor verbundenen Antriebsmotors. Dadurch wird vorteilhaft ausgenutzt, dass eine Bremswirkung auch durch Abstützen der Hydropumpe an dem Antriebsmotor erzielt werden kann. Das Einstellen des Bremsfördervolumens auf einen der verfügbaren Bremsleistung des Antriebsmotors entsprechenden Fördervolumenwert bietet dabei die Möglichkeit, die zur Verfügung gestellte Bremsleitung durch den Antriebsmotor optimal auszunutzen. Dies reduziert die Wärmebildung an dem Druckbegrenzungsventil, das lediglich die darüber hinausgehende kinetische Energie in Wärme umsetzen muss.

Der Hydromotor wird vorzugsweise auf ein der Stärke der Betätigung der Bremsbetätigungseinrichtung proportionales Schluckvolumen eingestellt. Eine solche proportionale Einstellung des Schluckvolumens des Hydromotors hat den Vorteil, dass sich für einen Bediener eines mit dem erfindungsgemäßen hydrostatischen Antriebs angetriebenen Fahrzeugs eine kalkulierbare Bremswirkung ergibt. Wird beispielsweise als Betätigungsstärke die Kraft auf ein Bremspedal gemessen, so erfolgt die Verstellung des Hydromotors proportional zu der von dem Bediener aufgebrachten Bremskraft. Eine solche proportionale Verstellung des Hydromotors erleichtert die Bedienung.

Um die Funktion des hydrostatischen Antriebs bzw. des Verfahrens zum Abbremsen eines hydrostatischen Antriebs in beiden Fahrtrichtungen in identischer Weise nutzen zu können, ist es vorzugsweise bei einem einfachen hydrostatischen Antrieb mit einer Förderung in eine der beiden Arbeitsleitungen vorteilhaft, für beide der Arbeitsleitungen des geschlossenen Kreislaufs je ein Druckbegrenzungsventil vorzusehen. Damit kann unabhängig von einer gewählten Fahrtrichtung und somit der zugehörigen Strömungsrichtung des Druckmittels in dem geschlossenen Kreislauf auch fahrtrichtungsunabhängig eine Bremswirkung erzielt werden.

Ein vorteilhaftes Ausführungsbeispiel des erfindungsgemäßen hydrostatischen Antriebs sowie des Verfahrens zum Abbremsen eines hydrostatischen Antriebs ist in der Zeichnung dargestellt. Es zeigen:

Fig. 1 eine schematische Darstellung eines erfindungsgemäßen hydrostatischen Antriebs;

Fig. 2 eine vereinfachte Darstellung eines ersten Verfahrensablaufs; und

Fig. 3 eine vereinfachte Darstellung eines zweiten Verfahrensablaufs.

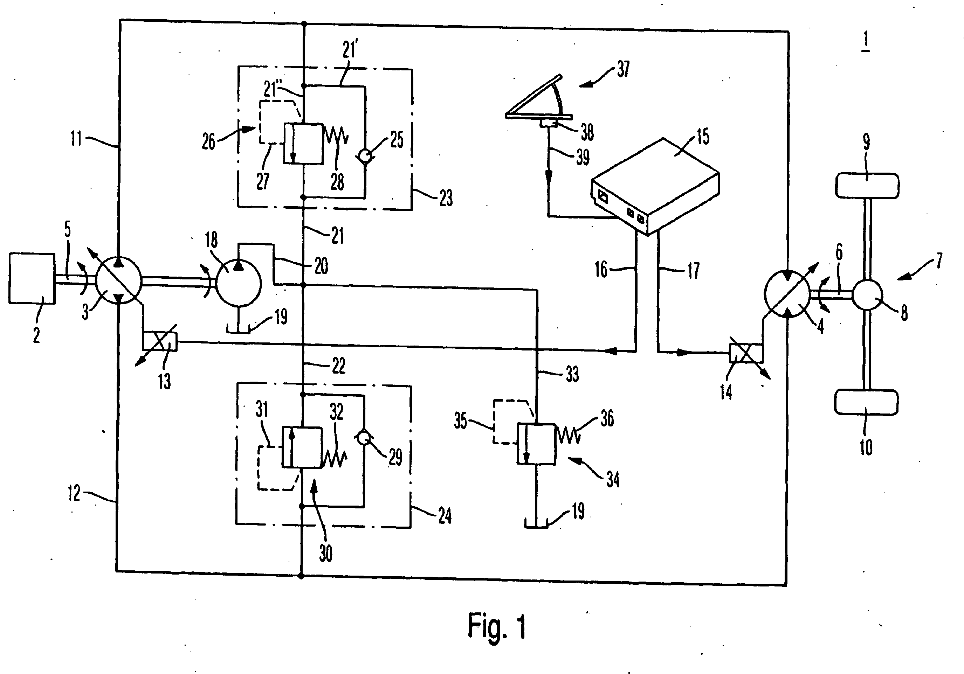

In der Fig. 1 ist ein erfindungsgemäßer hydrostatischer Antrieb dargestellt. Als primäre Antriebsquelle dient ein Antriebsmotor 2, der in der Regel als Brennkraftmaschine, vorzugsweise Dieselbrennkraftmaschine, ausgeführt ist. Der erfindungsgemäße hydrostatische Antrieb 1 kann beispielsweise ein hydrostatisches Getriebe des hydrostatisch angetriebenen Fahrzeugs, wie beispielsweise Gabelstapler oder Baumaschinen, sein, ist jedoch nicht auf solch einen Antrieb beschränkt.

Der Antriebsmotor 2 treibt eine verstellbare Hydropumpe 3 an. Die verstellbare Hydropumpe 3 ist für eine Förderung in zwei Richtungen ausgelegt und vorzugsweise eine Axialkolbenmaschine in Schrägachsen- oder Schrägscheibenbauart. Mit der Hydropumpe 3 in einem geschlossenen Kreislauf verbunden ist ein Hydromotor 4. Der Hydromotor 4 ist ebenfalls für einen Betrieb in beide Strömungsrichtungen ausgelegt. Das Schluckvolumen des Hydromotors 4 ist ebenfalls einstellbar.

Zum Antreiben der Hydropumpe 3 ist der Antriebsmotor 2 über eine Antriebswelle 5 mit der Hydropumpe 3 verbunden. Der Hydromotor 4 ist über eine Abtriebswelle 6 mit beispielsweise einer angetriebenen Achse 7 einer Baumaschine verbunden. Diese umfasst ein Achsdifferntial 8, dass das über die Abtriebswelle 6 zugeführte Antriebsdrehmoment an die Räder 9, 10 des Fahrzeugs weiterleitet.

Die Hydropumpe 3 fördert in eine erste Arbeitsleitung 11 oder eine zweite Arbeitsleitung 12. Der Hydromotor 3 ist über die erste Arbeitsleitung 11 und die zweite Arbeitsleitung 12 mit dem Hydromotor 4 in einem geschlossenen Kreislauf verbunden. Somit ergibt sich in Abhängigkeit von der Förderrichtung der Hydropumpe 3 eine Strömungsrichtung im oder gegen den Uhrzeigersinn in der Darstellung der Fig. 1. Die unterschiedlichen Förderrichtungen entsprechen dabei einer Vorwärts- bzw. Rückwärtsfahrt.

Die Förderrichtung sowie das Fördervolumen der Hydropumpe 3 werden vorzugsweise durch eine erste Verstellvorrichtung 13 eingestellt. Bei Verwendung einer Axialkolbenmaschine in Schrägscheibenbauart als Hydropumpe 3 betätigt die Verstellvorrichtung 13 einen Verstellmechanismus der Hydropumpe 3, beispielsweise eine in einer Schwenkwiege angeordnete Schrägscheibe.

In vergleichbarer Weise ist eine zweite Verstellvorrichtung 14 vorgesehen, welche mit dem Verstellmechanismus des Hydromotors 4 zusammenwirkt. Als Hydromotor 4 können verstellbare hydraulische Maschinen eingesetzt· werden. Der Hydromotor 4 könnte z.B. eine in Schrägachsen- oder Schrägscheibenbauweise ausgeführte hydrostatische Axialkolbenmaschine sein.

Die Einstellung des Fördervolumens der Hydropumpe 3 sowie des Schluckvolumens des Hydromotors 4 werden durch eine elektronische Steuereinheit 15 festgelegt. Die elektronische Steuereinheit 15 ist über eine erste Steuersignalleitung 16 bzw. eine zweite Steuersignalleitung 17 mit der ersten Verstellvorrichtung 13 bzw. der zweiten Verstellvorrichtung 14 verbunden. Während eines normalen Fahrbetriebs wird durch die elektronische Steuereinheit 15 das Übersetzungsverhältnis des hydrostatischen Getriebes festgelegt. Das hydrostatische Getriebe umfasst den geschlossenen Kreislauf und den darin angeordneten Hydromotor 4 sowie die Hydropumpe 3. Durch Festlegen des Fördervolumens der Hydropumpe 4 sowie des Schluckvolumens des Hydromotors 4 wird das Übersetzungsverhältnis des hydrostatischen Getriebes bestimmt. Als Eingangsgröße dient dabei beispielsweise einen Stellung eines in der Fig. 1 nicht dargestellten Fahrpedals.

Gemeinsam mit der Antriebswelle 5 ist mit der Hydropumpe 3 eine Speisepumpe 18 verbunden. Die Speisepumpe 18 ist als Konstantpumpe ausgeführt und zur Förderung in lediglich einer Richtung vorgesehen. Die Speisepumpe 18 dreht sich durch ihre feste Verbindung mit der Antriebswelle 5 mit der Drehzahl des Antriebsmotors 2.

Die Speisepumpe 18 saugt aus einem Tankvolumen 19 Druckmittel an und fördert es entsprechend der Drehzahl der Antriebswelle 5 in eine Speiseleitung 20. Die Speiseleitung 20 mündet in eine erste Verbindungsleitung 21 und eine zweite Verbindungsleitung 22 aus. Die erste Verbindungsleitung 21 verbindet die Speiseleitung 20. mit der ersten Arbeitsleitung 11. Die zweite Verbindungsleitung 22 verbindet die Speiseleitung 20 entsprechend mit der zweiten Arbeitsleitung 12.

In der ersten Verbindungsleitung 21 ist eine erste Speiseventileinheit 23 vorgesehen. Entsprechend ist auch in der zweiten Verbindungsleitung eine zweite Speiseventileinheit 24 vorgesehen.

Die Speiseventileinheiten 23 und 24 dienten gemeinsam mit der Speisepumpe 18 dem Aufrechterhalten eines Systemdrucks sowie dem Befüllen des hydraulischen Kreislaufs aus seinem während der Startphase zunächst drucklosen Zustand. Hierzu umfasst die erste Speiseventileinheit 23 ein erstes Rückschlagventil 25 in einem ersten Verbindungsleitungszweig 21'. Das Rückschlagventil 25 öffnet in Richtung auf die erste Arbeitsleitung 11 hin. Parallel zu dem ersten Rückschlagventil 25 ist ein erstes Druckbegrenzungsventil 26 in einem zweiten Verbindungsleitungszweig 21" angeordnet. Sofern der in der Speiseleitung 20 herrschend Speisedruck den Druck der ersten Arbeitsleitung 11 überschreitet, öffnet das erste Rückschlagventil 25 und Druckmittel strömt aus der Speiseleitung 20 über die erste Verbindungsleitung 21, ihren ersten Verbindungsleitungszweig 21' und das darin angeordnete Rückschlagventil 25 in die erste Arbeitsleitung 11. Ist dagegen der in der ersten Arbeitsleitung 11 herrschende Arbeitsdruck höher als der Speisedruck in der Speiseleitung 20, so geht das Rückschlagventil 25 in seine geschlossene Position über und sperrt den ersten Verbindungsleitungszweig 21'.

In dem zweiten Verbindungsleitungszweig 21" ist während des Auftretens normaler Arbeitsdrücke das erste Druckbegrenzungsventil 26 in seiner geschlossenen Position. In Richtung seiner geschlossenen Position ist das erste Druckbegrenzungsventil 26 durch eine erste Druckfeder 28 beaufschlagt. Entgegengesetzt zu der Kraft der ersten Druckfeder 28 wirkt über eine erste Messleitung 27 der in dem zweiten Verbindungsleitungszweig 21" herrschende Druck. Der in dem zweiten Verbindungsleitungszweig 21" herrschende Druck ist identisch mit dem Druck in der ersten Arbeitsleitung 11. Der in dem zweiten Verbindungsleitungszweig 21" herrschende Druck wird zu einer entsprechende Messfläche des ersten Druckbegrenzungsventils 26 über die erste Messleitung 27 weitergeleitet.

Übersteigt der Druck in der ersten Arbeitsleitung 11 einen kritischen Wert, der durch die erste Druckfeder 28 festgelegt ist, so übersteigt auch die hydraulische Kraft an der Messfläche, welche durch die erste Messleitung 27 mit dem Arbeitsleitungsdruck beaufschlagt wird, die Kraft der ersten Druckfeder 28. Infolge dessen wird das erste Druckbegrenzungsventil 26 in Richtung seiner geöffneten Position verstellt. Der Druck in der ersten Arbeitsleitung 11 kann somit über den zweiten Verbindungsleitungszweig 21" bei geöffnetem ersten Druckbegrenzungsventil 26 in Richtung auf die Speiseleitung 20 hin entspannt werden.

Die zweite Speiseventileinheit 24 ist entsprechend aufgebaut. Sie umfasst ein zweites Rückschlagventil 29 in einem dritten Verbindungsleitungszweig 22' der zweiten Verbindungsleitung, welches in Richtung auf die zweite Arbeitsleitung 12 hin öffnet. Das zweite Rückschlagventil 29 öffnet, sofern der Druck in der Speiseleitung 20 den Druck in der zweiten Arbeitsleitung 12 übersteigt. Parallel zu dem zweiten Rückschlagventil 29 ist ein zweites Druckbegrenzungsventil 30 in einem vierten Verbindungsleitungszweig 22" vorgesehen. Das zweite Druckbegrenzungsventil 30 öffnet, wenn eine hydraulische Kraft, die an einer Messfläche durch einen über eine zweite Messleitung 31 zugeführten Druck erzeugt wird, die Kraft einer in entgegengesetzter Richtung wirkenden zweiten Druckfeder 32 übersteigt. Die zweite Druckfeder 32 beaufschlagt das zweite Druckbegrenzungsventil 30 in Richtung seiner geschlossenen Position.

Wird die erste Arbeitsleitung 11 über das erste Druckbegrenzungsventil 26 in Richtung zu der Speiseleitung 20 hin entspannt und ist der in der Speiseleitung 20 herrschende Speisedruck höher als der Druck in der zweiten Arbeitsleitung 12, so öffnet das zweite Rückschlagventil 29 und die erste Arbeitsleitung 11 wird in Richtung der zweiten Arbeitsleitung 12 entspannt.

Zur Absicherung der Speiseleitung 20 sowie der Speiseventileinheiten 23 und 24 ist ein Speisedruckbegrenzungsventil 34 vorgesehen. Das Speisebegrenzungsventil 34 ist über eine Entspannungsleitung 33 mit der Speiseleitung 20 sowie den Verbindungsleitungen 21 und 22 verbunden. Das Speisedruckbegrenzungsventil 34 ist ebenfalls ein mit einer Feder 36 belastetes Druckbegrenzungsventil. Entgegengesetzt zu der Kraft der Feder 36 wirkt eine hydraulische Kraft, welche durch einen über eine dritte Messleitung 35 der Entspannungsleitung 33 entnommenen Druck erzeugt wird. Übersteigt der in der Speiseleitung 20 bzw. den Verbindungsleitungen 21, 22 herrschende Druck den durch die Feder 36 festgelegten maximalen Speisedruck, so wird das Speisedruckbegrenzungsventil 34 in Richtung seiner geöffneten Position verstellt und die Entspannungsleitung 33 in ein Tankvolumen 19 entspannt.

Für die nachfolgende Erläuterung eines Bremsvorgangs wird davon ausgegangen, dass zunächst eine Fahrsituation vorliegt, in der die Hydropumpe 3 in die erste Arbeitsleitung 11 fördert. Die Strömungsrichtung in der Fig. 1 ist somit im Uhrzeigersinn. Die erste Arbeitsleitung 11 ist die bezüglich der Hydropumpe 3 förderseitige Arbeitsleitung und stromaufwärts zu dem Hydromotor 4 angeordnet. Dementsprechend ist die zweite Arbeitsleitung 12 bei einer Förderung im Uhrzeigersinn stromabwärts des Hydromotors 4 angeordnet und bildet die saugseitige Arbeitsleitung der Hydropumpe 3. Bei einer Umkehrung der Fahrtrichtung kehren sich Förder- und Saugseite sowie die Strömungsrichtung um.

Zum Erfassen eines Bremsvorgangs ist ein Bremspedal 37 vorgesehen. Das Bremspedal 37 ist mit einem Sensor 38 verbunden, der bei Betätigung des Bremspedals 37 ein Signal über eine Signalleitung 39 an die elektronische Steuereinheit 15 weiterleitet. Das Bremspedal 37 bildet im dargestellten Ausführungsbeispiel eine Bremsbetätigungseinrichtung. Wird nun das Bremspedal 37 betätigt, so wird ein Bremsvorgang aufgrund des Signals des Sensors 38 die Betätigung erkannt und eine Betätigungsstärke des Bremspedals 37 durch den Sensor 38 erfasst. Der Sensor 38 kann ein Winkelmesser, Wegstreckenmesser oder Kraftmesser sein und dementsprechend einen Betätigungsweg oder eine Betätigungskraft des Bremspedals 37 erfassen. Das dieser Betätigungsstärke entsprechende Signal wird über eine Signalleitung 39 an die elektronische Steuereinheit 15 weitergegeben.

Sobald durch die elektronische Steuereinheit 15 erkannt wird, dass ein Bremsvorgang vorliegt, werden die erste Verstellvorrichtung 13 und die zweite Verstellvorrichtung 14 mit entsprechenden Steuersignalen beaufschlagt. Die erste Verstellvorrichtung 13 der Hydropumpe 3 wird durch ein entsprechendes Hydropumpensteuersignal über die erste Steuersignalleitung 16 auf ein Bremsfördervolumen eingestellt. Im einfachsten Fall ist das Bremsfördervolumen ein verschwindendes Fördervolumen der Hydropumpe 3, so dass ein Durchströmen der Hydropumpe 3 unmöglich ist.

Vorzugsweise wird der Hydromotor 4 zunächst bei Erkennen eines beginnenden Bremsvorgangs über ein entsprechendes Motorsteuersignal mittels der zweiten Verstellvorrichtung 14 auf ein reduziertes oder verschwindendes Schluckvolumen verstellt. Ausgehend aus dieser Position des Hydromotors 4 wird im Falle einer in Schrägscheibenbauweise ausgeführten Axialkolbenmaschine die Schwenkscheibe wieder ausgeschwenkt und so das Schluckvolumen des Hydromotors 4 erhöht, wobei der Schwenkwinkel mit zunehmender Betätigungsstärke der Bremsbetätigungseinrichtung zunimmt. Die Betätigungsstärke wird entweder als Weg, Winkel oder Kraft auf das Bremspedal 37 erfasst. Die Verstellung des Hydromotors 4 erfolgt so, dass die Strömungsrichtung in den geschlossenen Kreislauf beibehalten wird. Mit zunehmender Betätigungsstärke der Bremsbetätigungseinrichtung wirkt somit bei unveränderter Strömungsrichtung der Hydromotor 4 zunehmend als Pumpe und fördert Druckmittel in die stromabwärtige Arbeitsleitung. In dem vorbeschriebenen Ausführungsbeispiel, bei dem in dem geschlossenen Kreislauf im Uhrzeigersinn Druckmittel gefördert wird, fördert der Hydromotor 4 dementsprechend in die stromabwärts mit ihm verbundene zweite Arbeitsleitung 12. Je größer die Betätigungsstärke ist, desto größer ist der Druckmittelstrom, der durch den Hydromotor 4 in Richtung auf die Hydropumpe 3 hin erzeugt wird.

Wie es bereits ausgeführt wurde, ist das Bremsfördervolumen, auf das die Hydropumpe 3 eingestellt ist, im einfachsten Fall ein Nullfördezvolumen. Dementsprechend kann das in die zweite Arbeitsleitung 12 hineingeförderte Druckmittel die Hydropumpe 3 nicht durchströmen. Ein Druckanstieg in der zweiten Arbeitsleitung 12 ist die Folge. Übersteigt der Druck in der zweiten Arbeitsleitung 12 einen Druckwert, der durch das zweite Druckbegrenzungsventil 30 festgelegt ist, so öffnet das zweite Druckbegrenzungsventil 30 und entspannt die zweite Arbeitsleitung 12 in Richtung auf die Speiseleitung 20 hin.

Gleichzeitig fällt der Druck in der ersten Arbeitsleitung 11. Der Druckabfall entsteht durch das Ansaugen von Druckmittel durch den Hydromotor 4 aus der ersten Arbeitsleitung 11. Ein Nachfördern von Druckmittel durch die Hydropumpe 3 kann aufgrund des auf Null eingestellten Bremsfördervolumens nicht erfolgen. Damit übersteigt der Druck in der Speisedruckleitung 20 den in der ersten Arbeitsleitung 11 herrschenden Druck und das erste Rückschlagventil 25 öffnet. Über das zweite Druckbegrenzungsventil 30 der zweiten Speiseventileinheit 24 und das Rückschlagventil 25 der ersten Speiseventileinheit 23 wird der in der zweiten Arbeitsleitung 12 aufgebaute Druck unter Entstehung von Wärme an dem zweiten Druckbegrenzungsventil 30 in die erste Arbeitsleitung 11 entspannt. Die kinetische Energie wird somit an dem zweiten Druckbegrenzungsventil 30 in Wärme umgewandelt.

Gemäß einer bevorzugten Ausführung erfolgt die Verstellung des Schluckvolumens des Hydromotors 4 proportional zu der Betätigungsstärke der Bremsbetätigungseinrichtung. Die Bremsbetätigungseinrichtung kann anstelle des dargestellten Bremspedals 37 auch beispielsweise einen entsprechende Handhebel aufweisen. Weiterhin ist es vorteilhaft, das Bremsfördervolumen der Hydropumpe 3 nicht als Null-Fördervolumen auszuführen. Soll die zur Verfügung stehende Bremsleistung des Antriebsmotors 2 genutzt werden, so wird ein von Null verschiedenes Bremsfördervolumen der Hydropumpe 3 eingestellt. Das Bremsfördervolumen ist idealerweise so bemessen, dass bei dem Öffnungsdruck des zweiten Druckbegrenzungsventils 30 die verfügbare Bremsleistung des Antriebsmotors 2 nicht überschritten wird und so keine kritische Drehzahlerhöhung des Antriebsmotors 2 auftritt.

Dies ist dann der Fall, wenn die durch die Hydropumpe 3 aufgenommene hydraulische Leistung der Bremsleistung des Antriebsmotors 2 entspricht.

Um eine für einen Bediener angenehme Einstellung der Bremswirkung zu ermöglichen, ist vorzugsweise die Einstellung des Schluckvolumens des Hydromotors 4 proportional zur Betätigungsstärke des Bremspedals 37. Vorteilhaft erfolgt die Verstellung der Hydropumpe 3 auf ihr Bremsfördervolumen und die Verstellung des Hydromotors 4 bei Erkennen des Bremsvorgangs auf ein verschwindendes Schluckvolumen gleichzeitig. Dabei ist es insbesondere vorteilhaft, das Eigenschwenkverhalten der Pumpe und des Motors zu berücksichtigen. Wird die Hydropumpe 3 auf ein von Null verschiedenes Bremsfördervolumen gestellt, so erfolgt vorzugsweise auch hier zunächst eine Verstellung auf ein Null-Fördervolumen.

Die Darstellung der Fig. 1 zeit ein einfaches Ausführungsbeispiel mit lediglich einem Hydromotor 4. Die Erfindung kann selbstverständlich auf die Verwendung von mehreren Hydromotoren 4 erweitert werden, wobei die Hydromotoren durch eine gemeinsame oder separate Verstellvorrichtungen betätigt werden. Zum Erzielen einer Bremswirkung wird einer oder mehrere der vorhandenen Hydromotoren in der bereits beschriebenen Weise verstellt.

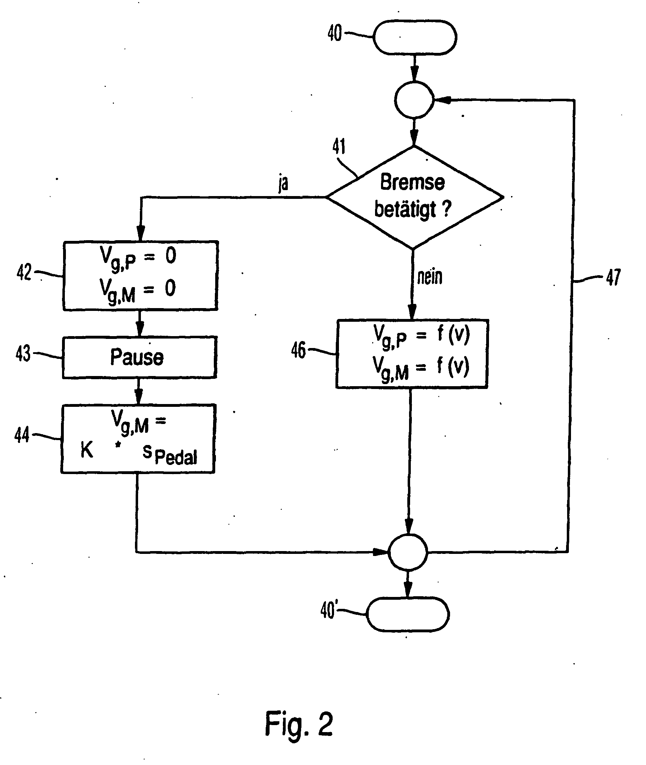

In der Fig 2 ist schematisch ein Beispiel eines ersten Verfahrensablaufs dargestellt. Ausgehend von einem normalen Fahrbetrieb 40 wird durch die elektronische Steuereinheit 15 abgefragt, ob durch die Bremsbetätigungseinrichtung ein Signal übermittelt wird. Empfängt die elektronische Steuereinheit 15 ein solches Signal, so wird ein Bremsvorgang erkannt und in Schritt 42 das Fördervolumen der Hydropumpe auf ein Bremsfördervolumen $V_{gp}$ verstellt. Gleichzeitig wird das Schluckvolumen des Hydromotors 4 $V_{gM}$, auf Null verschwenkt. Die gleichzeitige Verstellung auf ein Null-Förder- bzw. Null-Schluckvolumen kann das Entstehen von Druckspitzen in dem geschlossenen hydraulischen System vermeiden. Nach der Verstellung auf ein Null-Schluck- bzw. Null-Fördervolumen folgt eine kurze Pause. Die Pause 43 dient dazu, nach der möglichst schnellen Reduzierung des Schluckvolumens bzw. des Fördervolumens einen stabilen Systemzustand sicherzustellen, bevor in Schritt 44 das Schluckvolumen des Hydromotors 4 auf ein der Betätigungsstärke der Bremsbetätigungseinrichtung proportionales Schluckvolumen verstellt wird und die Hydropumpe 3 auf das Bremsfördervolumen verstellt wird. Während des weiteren Bremsvorgangs wird das Schluckvolumen des Hydromotors 4 der jeweils aktuellen Betätigungsstärke angepasst.

Die Abfrage, ob ein Bremsvorgang vorliegt erfolgt zyklisch, weswegen gemäß dem Pfeil 47 der Fig. 2 wieder zum Anfang des Verfahrens zurückgesprungen wird. Ergibt die Abfrage in Schritt 41, dass kein Bremsvorgang mehr vorliegt, so werden in Schritt 46 das Fördervolumen der Hydropumpe 3 sowie das Schluckvolumen des Hydromotors 4 wieder auf einen dem normalen Fahrbetrieb entsprechenden Wert verstellt. Diese Anpassung wird ebenfalls durch die elektronische Steuereinheit 15 übernommen, die das Übersetzungsverhältnis des hydrostatischen Getriebes wie bereis angedeutet in Abhängigkeit von einer Fahrpedalstellung oder einer Fahrhebelposition einstellt. Der hydrostatische Antrieb 1 befindet sich somit wieder in seinem ursprünglichen Fahrzustand mit veränderter Geschwindigkeit 40'.

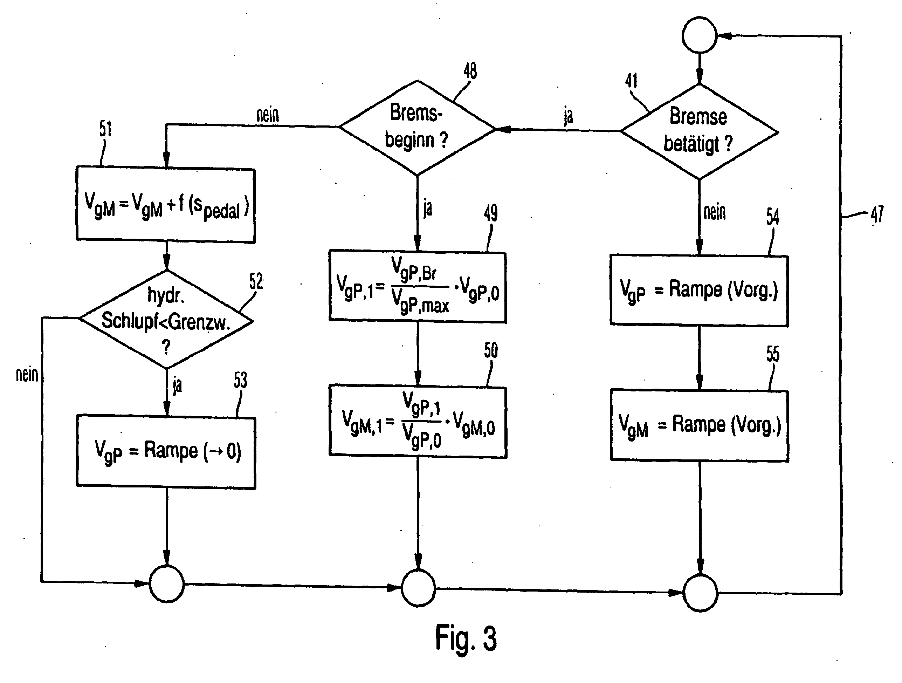

In der Fig. 3 ist ein alternatives besonders bevorzugtes Ausführungsbeispiel für den Ablauf des Verfahrens beim Bremsen dargestellt.

Ausgehend von dem normalen Fahrbetrieb wird zunächst in Schritt 41 durch die elektronische Steuereinheit 15 abgefragt, ob die Bremsbetätigungseinrichtung ein Signal übermittelt. In Schritt 41 wird damit bei Vorliegen eines entsprechenden Signals erkannt, ob das Bremspedal 37 betätigt wird. Erkennt die Steuereinheit 15 die Betätigung der Bremse, so wird anschließend in Schritte 48 ermittelt, ob der Bremsvorgang bereits andauert oder ob aus einem beschleunigten oder kontinuierlichen Fahrbetrieb ein Abbremsen des Fahrzeugs erfolgt. Hierzu wird mit einem vorangegangenen Wert verglichen und so festgestellt, ob das Signal durch die Bremsbetätigungseinrichtung neu übermittelt wird.

Wird damit ein Beginn eines Abbremsvorgangs festgestellt, so verzweigt der Verfahrensablauf zu Schritt 49. In den bei Feststellen eines Bremsbeginns folgenden Verfahrensschritten 49 und 50 werden sowohl die Hydropumpe 3 als auch der Hydromotor 4 in Richtung auf kleiner werdendes Schluck- bzw. Fördervolumen verstellt. Ausgehend von der ursprünglichen Einstellung des Fördervolumens der Hydropumpe $V_{gP,0}$, wird die Hydropumpe 3 auf einen reduzierten Wert $V_{gP,1}$ verstellt, welcher proportional zum Verhältnis aus dem Bremsfördervolumen $V_{gP,Br}$ zu $V_{gP,max}$ ist:

$$ V_{gP,1} \;=\; \frac{V_{gP,Br}}{V_{gP,max}} \bullet V_{gP,0} $$

Gleichzeitig wird der Hydromotor 4 auf ein reduziertes Schluckvolumen $V_{gM,1}$ verstellt. Das reduzierte Schluckvolumen $V_{gM,1}$ wird dabei so gewählt, dass das Übersetzungsverhältnis des hydrostatischen Antriebs 1 konstant bleibt. Ausgehend von dem ursprünglichen Schluckvolumen $V_{gM,0}$ wird somit der Hydromotor 4 auf das neue Schluckvolumen $V_{gM,1}$ gemäß folgender Beziehung verstellt:

$$V_{gM,1} = \frac{V_{gP,1}}{V_{gP,0}} \bullet V_{gM,0}$$

Die Verstellung des Fördervolumens der Hydropumpe 3 sowie des Schluckvolumens des Hydromotors 4 sind Bestandteil eines Verfahrensablaufs, bei dem wiederholt auch die Verfahrensschritte 41 und 48 durchgeführt werden. Nachdem folglich der Hydromotor 4 und die Hydropumpe 3 auf ihre reduzierten Fördervolumen $V_{gP,1}$ bzw. Schluckvolumen $V_{gM,1}$ eingestellt sind, wird erneut abgefragt, ob die Bremsbetätigungseinrichtung betätigt ist. Wird weiterhin eine Verzögerung gewünscht, so ist folglich die Betätigungseinrichtung kontinuierlich betätigt, so dass bei der nachfolgenden Abfrage in Schritt 48 festgestellt wird, dass ein Bremsbeginn nicht vorliegt.

Somit wird ein andauernder Bremsvorgang festgestellt und in Schritt 51 das Schluckvolumen des Hydromotors in Abhängigkeit von der Betätigung der Bremsbetätigungseinrichtung auf ein aktualisiertes Schluckvolumen verstellt. Die Stärke der Verstellung ist dabei abhängig von der Betätigung der Betätigungseinrichtung.

Anschließend wird in Schritt 52 überprüft, ob mit dem aktualisierten Schluckvolumen $V_{gP}$ des Hydromotors 4 ein Grenzwert für einen hydraulischen Schlupf erreicht ist, ab dem die Hydropumpe über eine mögliche Zeitrampe auf Null geschwenkt werden kann, so dass ein Abbremsen des Fahrzeugs bis zum Stillstand ermöglicht wird.

Ist der festgestellte Schlupf kleiner als der Grenzwert, so wird in Schritt 53 das Fördervolumen der Hydropumpe 3 entlang einer Rampe in Richtung verschwindenden Fördervolumens verstellt.

Wird dagegen in Schritt 52 festgestellt, dass die Schlupfgrenze erreicht ist, so unterbleibt eine Verstellung des Fördervolumens der Hydropumpe 3 und es wird zum Ausgangspunkt des Verfahrensablaufs gemäß dem Pfeil 47 verzweigt.

Während des Bremsvorgangs werden die Verfahrensschritte 51, 52 und evtl. 53 kontinuierlich wiederholt. Am Ende des Bremsvorgangs wird bei der erneuten Abfrage, ob die Bremsbetätigungseinrichtung betätigt ist, in Schritt 41 festgestellt, dass die Betätigungseinrichtung durch den Nutzer nicht länger betätigt wird. Dementsprechend wird entlang einer Rampe in Schritt 54 das Fördervolumen $V_{gP}$ der Hydropumpe 3 wieder auf einen vorgegebenen Wert verstellt. Gleichzeitig oder zeitlich versetzt hierzu wird auch das Schluckvolumen des Hydromotors 4 $V_{gM}$ entlang einer Rampe auf einen vorgegebenen Wert in Schritt 55 verstellt. Die vorgegebenen Werte entsprechen dabei einem Übersetzungsverhältnis des Antriebs 1, welches der neuen Fahrsituation angepasst ist.

Bei dem in der Fig. 3 dargestellten bevorzugten Verfahrensablauf ist ein Nullschwenken des Hydromotors 4 nicht erforderlich. Es können somit für den Antrieb zur Durchführung des Verfahrensablaufs nach dem zweiten Beispiel auch solche Motoren eingesetzt werden, welche nicht bis auf ein verschwindendes Schluckvolumen verstellbar sind.

## Patentansprüche

1. Hydrostatischer Antrieb umfassend eine Hydropumpe (3) und einen damit im geschlossenen Kreislauf über eine erste Arbeitsleitung (11) und eine zweite Arbeitsleitung (12) verbundener Hydromotor (4) und eine Bremsbetätigungseinrichtung (37),
   wobei zumindest ein mit einer stromabwärts des Hydromotors (4) angeordneten Arbeitsleitung (11, 12) verbundenes Druckbegrenzungsventil (26, 30) vorgesehen ist und das zumindest eine Druckbegrenzungsventil (26, 30) bei einem festgelegten Wert öffnet, und
   wobei die Hydropumpe (3) bei Betätigen der Bremsbetätigungseinrichtung (37) auf ein Bremsfördervolumen einstellbar ist und der Hydromotor (4) abhängig von einer Betätigungsstärke der Bremsbetätigungseinrichtung (37) mit zunehmender Betätigungsstärke in Richtung größeren Schluckvolumens verstellbar ist,
   **dadurch gekennzeichnet,**
   **dass** das Bremsfördervolumen der Hydropumpe (3) ein von Null verschiedenes Fördervolumen ist, bei dem die hydraulische Leistung bei einem Öffnungsdruck des Druckbegrenzungsventils (26, 30) einer verfügbaren Bremsleistung eines Antriebsmotors (2) entspricht.

2. Hydrostatischer Antrieb nach Anspruch 1,
   **dadurch gekennzeichnet,**
   **dass** der Hydromotor (4) bei Betätigen der Bremsbetätigungseinrichtung (37) zunächst auf ein reduziertes oder verschwindendes Fördervolumen einstellbar und davon ausgehend in Richtung größeren Schluckvolumens einstellbar ist.

3. Hydrostatischer Antrieb nach Anspruch 1 oder 2,
   **dadurch gekennzeichnet,**
   **dass** der Hydromotor (4) auf ein der Betätigungsstärke der Bremabetätigungseinrichtung (37) proportionales Schluckvolumen einstellbar ist.

4. Hydrostatischer Antrieb nach einem der Ansprüche 1 bis 3,
   **dadurch gekennzeichnet,**
   **dass** ein weiteres mit der anderen Arbeitsleitung (11, 12) verbundenes Druckbegrenzungsventil (26, 30) vorgesehen ist.

**5.** Hydrostatischer Antrieb nach einem der Ansprüche 1 bis 4,
**dadurch gekennzeichnet,**
**dass** zur Einstellung des Bremsfördervolumens der Hydropumpe (3) und des Schluckvolumens des Hydromotors (4) eine elektronische Steuereinheit (15) vorgesehen ist und der elektronischen Steuereinheit (15) ein die Betätigungsstärke der Betätigungseinrichtung (37) wiedergebendes Bremssignal zuführbar ist.

**6.** Hydrostatischer Antrieb nach einem der Ansprüche 1 bis 5,
**dadurch gekennzeichnet,**
**dass** das zumindest eine Druckbegrenzungsventil (26, 30) in jeweils einer Speiseventileinheit (23, 24) angeordnet ist.

**7.** Verfahren zum Abbremsen eines hydrostatischen Antriebs umfassend eine Hydropumpe (3) und einen damit im geschlossenen Kreislauf verbundenen Hydromotor (4) und zumindest ein mit einer stromabwärts des Hydromotors (4) angeordneten Arbeitsleitung (11, 12) verbundenes Druckbegrenzungsventil (26, 30), das bei einem festgelegten Wert öffnet, mit folgenden Verfahrensschritten:

- Erkennen einer Betätigung einer Bremsbetätigungseinrichtung (37),
- Einstellen eines Bremsfördervolumens der Hydropumpe (3),
- Einstellen des Hydromotors (4) in Abhängigkeit von einer zunehmenden Betätigungsstärke einer Bremsbetätigungseinrichtung (37) in Richtung größeren Schluckvolumens und
- Entspannen eines in der stromabwärts des Hydromotors (4) angeordneten Arbeitsleitung (11, 12) herrschenden Bremsdrucks über das Druckbegrenzungsventil (26, 30),

**dadurch gekennzeichnet,**
**dass** bei Betätigung der Bremsbetätigungseinrichtung (37) die Hydropumpe (3) auf ein von Null verschiedenes Bremsfördervolumen eingestellt wird, bei dem die bei Öffnungsdruck des Druckbegrenzungsventils (26, 30) aufgenommene hydraulische Leistung der verfügbaren Bremsleistung eines Antriebsmotors (2) entspricht.

**8.** Verfahren zum Abbremsen eines hydrostatischen Antriebs nach Anspruch 7,
**dadurch gekennzeichnet,**
**dass** vor dem Einstellen des Schluckvolumens des Hydromotors (4) abhängig von der Betätigungsstärke der Bremsbetätigungseinrichtung (37) der Hydromotor (4) bei Erkennen eines Bremsvorgangs zunächst auf ein reduziertes oder verschwindendes Schluckvolumen eingestellt wird.

**9.** Verfahren zum Abbremsen eines hydrostatischen Antriebs nach Anspruch 7 oder 8,
**dadurch gekennzeichnet,**
**dass** der Hydromotor (4) auf ein der Betätigungsstärke der Bremsbetätigungseinrichtung (37) proportionales Schluckvolumen eingestellt wird.

**10.** Verfahren zum Abbremsen eines hydrostatischen Antriebs nach einem der Ansprüche 7 bis 9,
**dadurch gekennzeichnet,**
**dass** einer elektronischen Steuereinheit (15) ein die Betätigungsstärke der Bremsbetätigungseinrichtung (37) wiedergebendes Signal zugeführt wird und durch die elektronische Steuereinheit (15) das Bremsfördervolumen der Hydropumpe (3) und das Schluckvolumen des Hydromotors (4) eingestellt wird.

**11.** Verfahren nach einem der Ansprüche 7 bis 10,
**dadurch gekennzeichnet,**
**dass** der in der stromabwärts des Hydromotors (4) angeordneten Arbeitsleitung (11, 12) herrschende Druck über ein in einer Speiseventileinheit (23, 24) angeordnetes Druckbegrenzungsventil (26, 30) in eine Speiseleitung (20) entspannt wird.

**Claims**

**1.** A hydrostatic drive comprising a hydropump (3) and a hydromotor (4) connected to the latter in a closed circuit via a first operating line (11) and a second operating line (12) and a brake-actuation device (37), wherein at least one pressure-limiting valve (26, 30) connected to an operating line (11, 12) arranged downstream of the hydromotor (4) is provided, and the at least one pressure-limiting valve (26, 30) opens at a specified value, and wherein the hydropump (3) can be adjusted to a brake-pumping volume upon the actuation of the brake-actuation device (37), and, dependent upon an actuation strength of the brake-actuation device (37), the hydromotor (4) can be adjusted with an increasing actuation strength in the direction towards a larger intake volume,
**characterised in that**
the brake-pumping volume of the hydropump (3) is a pumping volume different from zero at which the hydraulic power at an opening pressure of the pressure-limiting valve (26, 30) corresponds to an available braking power of the drive motor (2).

**2.** The hydrostatic drive according to claim 1,
**characterised in that**,
upon the actuation of the brake-actuation device (37), the hydromotor (4) can be adjusted initially to a reduced or vanishing pumping volume and, starting from this, can be adjusted in the direction towards a larger intake volume.

3. The hydrostatic drive according to claim 1 or 2, **characterised in that** the hydromotor (4) can be adjusted to an intake volume proportional to the actuation strength of the brake-actuation device (37).

4. The hydrostatic drive according to any one of claims 1 to 3, **characterised in that** a further pressure-limiting valve (26, 30) connected to the other operating line (11, 12) is provided.

5. The hydrostatic drive according to any one of claims 1 to 4, **characterised in that**, in order to adjust the brake-pumping volume of the hydropump (3) and the intake volume of the hydromotor (4), an electronic control unit (15) is provided, and a braking signal reproducing the actuation strength of the actuation device (37) can be supplied to the electronic control unit (15).

6. The hydrostatic drive according to any one of claims 1 to 5, **characterised in that** the at least one pressure-limiting valve (26, 30) is arranged in each case in a feeder-valve unit (23, 24).

7. A method for braking a hydrostatic drive comprising a hydropump (3) and a hydromotor (4) connected to the latter in a closed circuit and at least one pressure-limiting valve (26, 30) connected to an operating line (11, 12) arranged downstream of the hydromotor (4), which opens at a specified value, with the following method steps:

    - detection of an actuation of a brake-actuation device (37),
    - adjustment of a brake-pumping volume of the hydropump (3),
    - adjustment of the hydromotor (4) in the direction towards a larger intake volume dependent upon an increasing actuation strength of a brake-actuation device (37) and
    - release of a braking pressure predominating in the operating line (11, 12) arranged downstream of the hydromotor (4) via the pressure-limiting valve (26, 30),

    **characterised in that**, upon the actuation of the brake-actuation device (37), the hydropump (3) is adjusted to a brake-pumping volume different from zero at which the hydraulic power taken up at the opening pressure of the pressure-limiting valve (26, 30) corresponds to the available braking power of a drive motor (2).

8. The method for braking a hydrostatic drive according to claim 7, **characterised in that**, before the adjustment of the intake volume of the hydromotor (4) dependent upon the actuation strength of the brake-actuation device (37), the hydromotor (4) is initially adjusted upon the detection of a braking process to a reduced or vanishing intake volume.

9. The method for braking a hydrostatic drive according to claim 7 or 8, **characterised in that** the hydromotor (4) is adjusted to an intake volume proportional to the actuation strength of the brake-actuation device (37).

10. The method for braking a hydrostatic drive according to any one of claims 7 to 9, **characterised in that** a signal reproducing the actuation strength of the brake-actuation device (37) is supplied to an electronic control unit (15), and the brake-pumping volume of the hydropump (3) and the intake volume of the hydromotor (4) is adjusted by the electronic control unit (15).

11. The method according to any one of claims 7 to 10, **characterised in that** the pressure predominating in the operating line (11, 12) disposed downstream of the hydromotor (4) is released into a feeder line (20) via a pressure-limiting valve (26, 30) disposed in a feeder-valve unit (23, 24).

**Revendications**

1. Système d'entraînement hydrostatique comprenant une pompe hydraulique (3) et un moteur hydraulique (4), qui y est relié en circuit fermé, par l'intermédiaire d'une première conduite de travail (11) et d'une deuxième conduite de travail (12), ainsi qu'un dispositif d'actionnement de freinage (37), système dans lequel il est prévu au moins une vanne de limitation de pression (26, 30) reliée à une conduite de travail (11, 12) agencée en aval du moteur hydraulique (4), et ladite au moins une vanne de limitation de pression (26, 30) ouvre pour une valeur fixée, et dans lequel la pompe hydraulique (3), lors de l'actionnement du dispositif d'actionnement de freinage (37), peut être réglée sur un volume refoulé de freinage par tour ou volume refoulé de freinage, et le moteur hydraulique (4) peut être réglé, en fonction d'une intensité d'actionnement du dispositif d'actionnement de freinage (37), dans le sens d'un volume absorbé par tour ou volume absorbé plus grand pour une intensité d'actionnement croissante, **caractérisé en ce que** le volume refoulé de freinage de la pompe hydraulique (3) est un volume refoulé différent de zéro, pour lequel la puissance hydraulique correspond, pour la pression d'ouverture de la vanne de limitation de pression (26, 30), à une puissance de freinage disponible d'un moteur d'entraînement (2).

2. Système d'entraînement hydrostatique selon la revendication 1,
   **caractérisé en ce que** le moteur hydraulique (4), lors de l'actionnement du dispositif d'actionnement de freinage (37), peut tout d'abord être réglé sur un volume refoulé réduit ou disparaissant, et à partir de là, dans le sens d'un volume absorbé plus grand.

3. Système d'entraînement hydrostatique selon la revendication 1 ou la revendication 2,
   **caractérisé en ce que** le moteur hydraulique (4) peut être réglé sur un volume absorbé proportionnel à l'intensité d'actionnement du dispositif d'actionnement de freinage (37).

4. Système d'entraînement hydrostatique selon l'une des revendications 1 à 3,
   **caractérisé en ce qu'**il est prévu une autre vanne de limitation de pression (26, 30) reliée à l'autre conduite de travail (11, 12).

5. Système d'entraînement hydrostatique selon l'une des revendications 1 à 4,
   **caractérisé en ce que** pour régler le volume refoulé de freinage de la pompe hydraulique (3) et le volume absorbé du moteur hydraulique (4), il est prévu une unité de commande électronique (15), et il est possible d'amener à l'unité de commande électronique (15), un signal de freinage reproduisant l'intensité d'actionnement du dispositif d'actionnement de freinage (37).

6. Système d'entraînement hydrostatique selon l'une des revendications 1 à 5,
   **caractérisé en ce que** ladite au moins une vanne de limitation de pression (26, 30) est agencée respectivement dans une unité de vanne d'alimentation (23, 24).

7. Procédé pour freiner un système d'entraînement hydrostatique comprenant une pompe hydraulique (3) et un moteur hydraulique (4), qui y est relié en circuit fermé, et comprenant au moins une vanne de limitation de pression (26, 30), qui est reliée à une conduite de travail (11, 12) agencée en aval du moteur hydraulique (4), et ouvre pour une valeur fixée, le procédé présentant les étapes suivantes :

- détection d'un actionnement d'un dispositif d'actionnement de freinage (37),
- réglage d'un volume refoulé de freinage de la pompe hydraulique (3),
- réglage du moteur hydraulique (4), en fonction d'une intensité d'actionnement croissante d'un dispositif d'actionnement de freinage (37), dans le sens d'un volume absorbé plus grand, et
- détente, par l'intermédiaire de la vanne de limitation de pression (26, 30), d'une pression de freinage régnant dans la conduite de travail (11, 12) agencée en aval du moteur hydraulique (4),

   **caractérisé en ce que** lors de l'actionnement du dispositif d'actionnement de freinage (37), on règle la pompe hydraulique (3) sur un volume refoulé de freinage différent de zéro, pour lequel la puissance hydraulique absorbée correspond, pour la pression d'ouverture de la vanne de limitation de pression (26, 30), à la puissance de freinage disponible d'un moteur d'entraînement (2).

8. Procédé pour freiner un système d'entraînement hydrostatique, selon la revendication 7,
   **caractérisé en ce qu'**avant le réglage du volume absorbé du moteur hydraulique (4) en fonction de l'intensité d'actionnement du dispositif d'actionnement de freinage (37), on règle tout d'abord le moteur hydraulique (4), lors de la détection d'une phase de freinage, sur un volume absorbé réduit ou disparaissant.

9. Procédé pour freiner un système d'entraînement hydrostatique, selon la revendication 7 ou la revendication 8,
   **caractérisé en ce que** l'on règle le moteur hydraulique (4) sur un volume absorbé proportionnel à l'intensité d'actionnement du dispositif d'actionnement de freinage (37).

10. Procédé pour freiner un système d'entraînement hydrostatique, selon l'une des revendications 7 à 9,
    **caractérisé en ce que** l'on amène à une unité de commande électronique (15), un signal de freinage reproduisant l'intensité d'actionnement du dispositif d'actionnement de freinage (37), et l'unité de commande électronique (15) règle le volume refoulé de freinage de la pompe hydraulique (3) et le volume absorbé du moteur hydraulique (4).

11. Procédé pour freiner un système d'entraînement hydrostatique, selon l'une des revendications 7 à 10,
    **caractérisé en ce que** la pression régnant dans la conduite de travail (11, 12) agencée en aval du moteur hydraulique (4) est détendue, par l'intermédiaire d'une vanne de limitation de pression (26, 30) agencée dans une unité de vanne d'alimentation (23, 24), vers une conduite d'alimentation (20).

Fig. 1

**40**

**41** Bremse betätigt ?

ja

**42** $V_{g,P} = 0$
$V_{g,M} = 0$

**43** Pause

**44** $V_{g,M} = K * s_{Pedal}$

nein

**46** $V_{g,P} = f(v)$
$V_{g,M} = f(v)$

**47**

**40'**

## Fig. 2

Fig. 3

**EP 1 960 699 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19852039 A1
- WO 9733782 A